# EUROPEAN PATENT SPECIFICATION

(11) **EP 0 671 699 B1**
(45) Date of publication and mention of the grant of the patent: **16.02.2000**
(21) Application number: 95301581.5
(22) Date of filing: 10.03.1995
(51) Int. Cl.: G06K 15/10, B41J 2/21, H04N 1/191

(54) **Bidirectional color ink jet printing with head signature reduction**
In zwei Richtungen schreibender Tintenstrahl-Farbdrucker mit reduzierter Signatur des Schreibkopfs
Impression couleur bidirectionnelle à jet d'encre avec réduction de signature de tête.

(30) Priority: 10.03.1994 US 208556
(43) Date of publication of application: 13.09.1995
(73) Proprietor: XEROX CORPORATION, Rochester, New York 14644 (US)
(72) Inventor: Klassen, R. Victor, Webster, NY 14580 (US); Harrington, Steven J., Holley, NY 14470 (US)
(74) Representative: Grünecker, Kinkeldey, Stockmair & Schwanhäusser Anwaltssozietät

(56) References cited:
- EP-A- 0 546 853
- EP-A- 0 578 434
- US-A- 4 967 203
- US-A- 4 999 646

## Description

This invention relates to drop-on-demand ink jet printing systems and, more particularly, to a multi-color thermal ink jet printer which prints in bidirectional swaths.

Color in documents is accomplished in many printing devices (e.g., thermal ink jet printers) by reproducing separations of the image, where each separation provides varying density of a single primary color. When combined together with other separations, the result is a full color image.

In one type of ink jet device, a printhead having an array of several nozzles oriented parallel to the direction of sheet travel is moved across the recording medium in a direction perpendicular to the direction of sheet travel. During each transit of the printhead, the printhead prints a swath of spots or pixels across the page corresponding to an image. Most thermal ink jet printers print some number of scanlines in a swath, one scanline per nozzle, and the swath boundaries may be visible in completed prints made thereby. The boundaries are visible because of ink flowing beyond the boundary of the array end (in the case of paper) or pulling away from the boundary of the array end due to surface tension (in the case of transparencies). In the former case a thin line along the boundary is more heavily inked; in the latter it is not inked at all.

Bidirectional printing is common for high speed black (or monocolor) only printing. However, color ink jet printing is normally performed unidirectionally (left to right or right to left, not both). In the latter case, multiple nozzle arrays (printheads) arranged in parallel may be provided, each nozzle array printing with a different color of ink to produce an eventual color image from plural, sequentially formed color image separations. One particular type of color ink jet printer has a single head (corresponding to an array of nozzles) per color, with four heads mounted one behind the other on the carriage, so that all four colors - cyan, magenta, yellow and black - of all scanlines in a swath are printed in a single pass, with a fixed order for the separations within a pixel.

A problem with bidirectional printing is that when the carriage is moving in a reverse direction, the colors are printed in reverse order, giving slightly different colors from the same combination of separation colors: printing a cyan pixel on a magenta pixel generally gives a different color from that produced when printing a magenta pixel on a cyan pixel.

US-A-4,999,646 (Trask) discloses a unidirectional printing system, in which, to correct the interswath boundary artifact, a multiple pass complementary dot pattern ink jet printing process for enhancing the uniformity and consistency of dot (drop) formation during color ink jet printing is employed. Using this process, successive printed swaths are made by depositing first and second partially overlapping complementary dot patterns on a print media. Simultaneously, the dot spacing in coincident dot rows within the overlapping portions of the dot patterns is alternated between dots in the first pattern and dots in the second pattern.

EP-0 578 434 discloses an ink jet recording apparatus, wherein a plurality of recording heads for ejecting inks in different colors are aligned, and are reciprocally moved in the alignment direction, and an image is recorded by performing main scans in both the forward and backward paths of the reciprocal movement, and performing a sub-scan after each main scan. An area recordable in a single main scan in thinned out according to thinning arrangements having a complementary relationship therebetween, and thinned-out images are recorded in a plurality of main scans. During this interval, the sub-scan is performed in a direction opposite to the normal sub-scan direction at a predetermined period.

There remains a need for a color printer which incorporates the speed benefits of bidirectional printing. There is also a need for a color printer which produces consistent color representations in each direction of printhead travel and which avoids interswath boundary artifacts.

It is an object of the invention to provide a method and an apparatus for bidirectional color printing that produce consistent color representations in each direction of printhead travel and that avoid interswath boundary artifacts.

This object is solved by the method as claimed in independent claim 1 and by the apparatus as claimed in independent claim 14. Preferred embodiments of the invention are subject matters of dependent claims.

The invention is directed to a method of controlling a color ink jet printer which prints a swath of a color image by deposition of different color droplets in a predetermined color order during each forward and return transit across a sheet to print color images. The order of the deposition of the different color droplets during the return transit is modified to be the same deposition as in the forward transit, thereby substantially reducing bi-directional printing artifacts.

In accordance with one aspect of the invention there are provided method and apparatus for operating a color ink jet printer of the type which prints one swath of the image at a time with each bidirectional transit across a sheet. An image may be optionally preprocessed with full undercolor removal (UCR), so that each color pixel in the image is defined by black and only two colored inks. Color will be deposited to print the image on forward (or first) and return (or second) transits of a four color printhead across a sheet. The colors and location printed in each transit are determined prior to the first transit, by determining first, which colors may be printed in the second transit irrespective of their order of deposit. The result of this determination is logically ANDed with a checkerboard pattern to determine the printing pattern for the second transit. Then, the other required colors for the image which will not be printed with the second transit are printed (in a complementary image pattern) on a first transit. Each swath is printed with forward and reverse transits, with checkerboarding of the reverse transit to prevent head signature artifacts, as discussed further below.

In a preferred embodiment, the sheet is advanced by a distance equal to half the width of a swath between a forward transit and a reverse transit. In this case, the method is further characterised in that, for colorants A, B, C and D, printable during the forward transit in a fixed predetermined order B-C-D, where colorant A is not printed in combination with any other colorant and may be printed in any arbitrary position in the sequence, that portion of the reverse swath printed where a forward partial swath is printed first is determined by:
**A**_{2LR}=**A** ∧ **X**
**B**_{2LR} = **B** ∧¬ (**C**∨**D**) ∧ **X**
**C**_{2LR} = **C** ∧¬ **D** ∧ **X**
**D**_{2LR} = **D** ∧ **X**
wherein 2LR refers to the reverse transit swath, ∧¬ refers to the logical operand AND NOT, ∨ refers to the logical operand OR and X refers to the predetermined head signature mitigation signal logically ANDed with the generated signal set; that portion of the forward transit swath printed where no reverse partial swath is printed first is determined by:
**A**_{1RL} = **A** ∧¬ **A**_{2LR}
**B**_{1RL} = **B** ∧¬ **B**_{2LR}
**C**_{1RL} = **C** ∧¬**C**_{2LR}
**D**_{1RL} = **D** ∧¬ **D**_{2LR}
wherein 1RL refers to the forward transit swath;
that portion of the forward swath printed where a reverse partial swath is printed first has been determined by:
**A**_{2RL} = **A** ∧ **X**
**B**_{2RL} = **B** ∧ **X**
**C**_{2RL} = **C** ∧¬ B ∧ **X**
**D**_{2RL} = **D** ∧¬ (**C** ∨ **B**) ∧ **X**; and
that portion of the reverse swath printed where no forward partial swath is printed first has been determined by:
**A**_{1LR} = **A** ∧¬ **A**_{2RL}
**B**_{1LR} = **B** ∧¬ **B**_{2RL}
**C**_{1LR} = **C** ∧¬ **C**_{2RL}
**D**_{1LR} = **D** ∧¬ **D**_{2RL}

In addition, for colorants A, B, C and D, each printable alone or in combination with any others, and printable during the forward transit in a fixed predetermined order A-B-C-D, that portion of the reverse swath which is printed where a forward partial swath is printed first has been determined by:
**A**_{2LR} = **A** ∧¬ (**B** ∨ **C** ∨ **D**) **X**
**B**_{2LR} = **B** ∧¬ (**C** ∨ **D**) ∧**X**
**C**_{2LR} = **C** ∧¬ **D** ∧**X**
**D**_{2LR} = **D** ∧ **X**
wherein 2LR refers to the reverse transit swath, ∧¬ refers to the logical operand AND NOT, v refers to the logical operand OR and X refers to the predetermined head signature mitigation signal logically ANDed with the the generated signal set;
that portion of the forward transit swath printed where no reverse partial swath is printed first is determined by:
**A**_{1RL} = **A** ∧¬ **A**_{2LR}
**B**_{1RL} = **B** ∧¬ **B**_{2LR}
**C**_{1RL} = **C** ∧¬ **C**_{2LR}
**D**_{1RL} = **D** ∧¬ **D**_{2LR}
wherein 1RL refers to the forward transit swath;
that portion of the forward swath which is printed where a reverse partial swath is printed first is determined by:
**A**_{2RL} = **A** ∧ **X**
**B**_{2RL} = **B** ∧¬ **A** ∧ **X**
**C**_{2RL} = **C** ∧¬ (**B** ∨ **A**) ∧ **X**
**D**_{2RL} = **D** ∧¬ (**C** ∨ **B** ∨ **A**) ∧ **X**; and
that portion of the reverse swath which is printed where no forward partial swath is printed first is been determined by:
**A**_{1LR} = **A** ∧¬ **A**_{2RL}
**B**_{1LR} = **B** ∧¬ **B**_{2RL}
**C**_{1LR} = **C** ∧¬ **C**_{2RL}
**D**_{1LR} = **D** ∧¬ **D**_{2RL}.

According to the invention, if only one color is printed, it can be done in a checkerboard fashion, with one parity of the checkerboard on the first transit, and the other on the second transit. If two colors are printed in one pixel, one of them is normally printed first. In the unidirectional mode this is totally specified; whichever color is printed first in unidirectional printing should be printed in the first transit for bidirectional printing. The second color can be checkerboarded, printing half in each transit.

If the printing order KCMY (i.e. black, cyan, magenta, yellow) is used for right-to-left printing on the printer, let X be a bitmap representing the checkerboard, and let C, M, Y and K be bitmaps representing the input. The pattern of colorants for the first transit is derived from that for the second transit. For the second transit:
K_{2LR} = K ∧ X
C_{2LR} = C ∧¬ (M ∨ Y) ∧ X
M_{2LR} = M ∧¬ Y ∧ X
Y_{2LR} = Y ∧ X

The subscript LR emphasizes that the direction of travel is left to right. The symbols ∧, ∨ and ¬ indicate the logical operations of AND, OR and NOT, respectively. Then for the first transit,
K_{1RL} = K ∧¬ K_{2LR}
C_{1RL} = C ∧¬ C_{2LR}
M_{1RL} = M ∧¬ M_{2LR}
Y_{1RL} = Y ∧¬ Y_{2LR}

In the described manner, correct color printing can be accomplished with bi-directional printing, and with the use of a checkerboard preventing head signature artifacts, as discussed further below.

A more complete understanding of the present invention can be obtained by considering the following detailed description in conjunction with the accompanying drawings in which:
Figure 1 is a schematic isometric view of a multi-color, carriage type, thermal ink jet printer according to the present invention;
Figure 2 is a schematic block diagram illustrating the control arrangement of the ink jet printer operating in accordance with the method of the present invention;
Figure 3A and Figure 3B illustrate swath processors in the control arrangement of Figure 2;
Figure 4 illustrates the composition of each swath bitmap from the bitmap describing an image; and
Figure 5 illustrates the arrangement of the swaths preferably used to form an image.

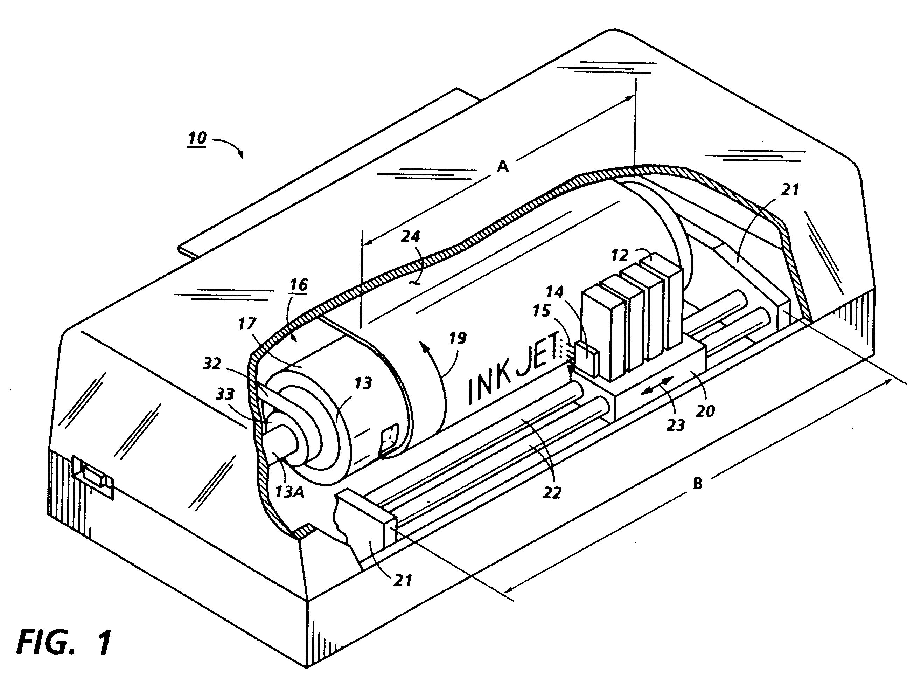

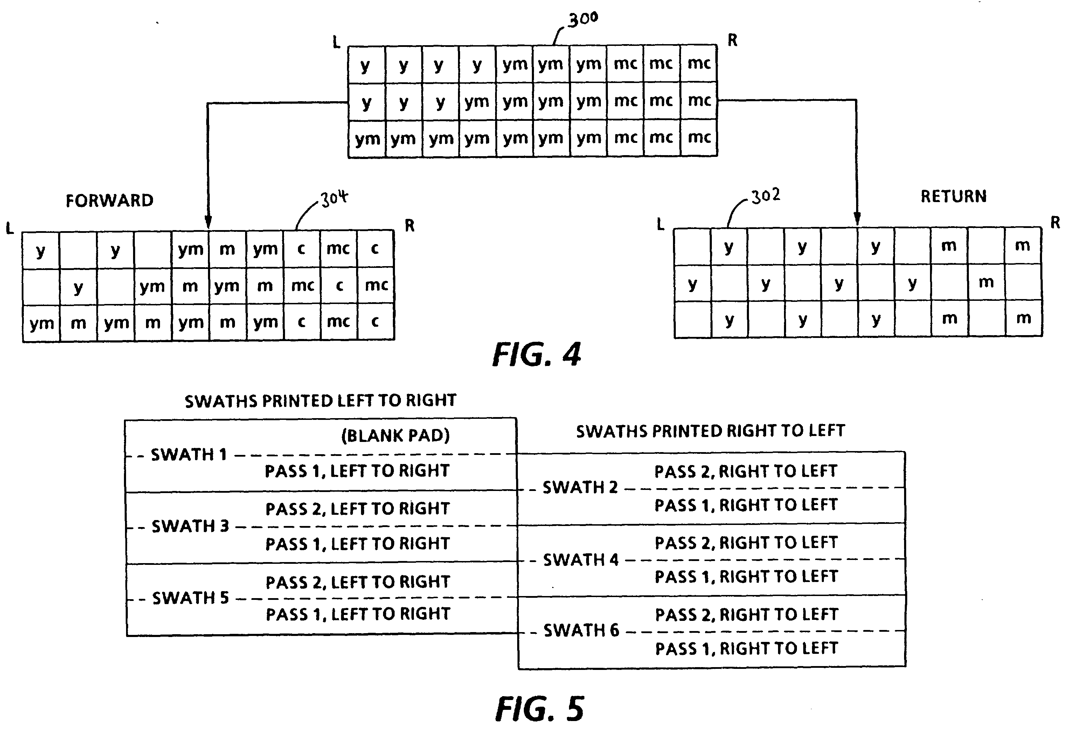

In Figure 1, a multi-color thermal ink jet printer 10 is shown containing several disposable ink supply cartridges 12, each with an integrally attached printhead 14. The ink cartridge and printhead combination are removably mounted on a translatable carriage 20. During the printing mode, the carriage reciprocates back and forth on, for example guide rails 22, parallel to the recording medium or sheet 24 as depicted by arrow 23. The end-to-end travel distance of the carriage and printheads is shown as distance B. The carriage is driven back and forth across the length of a cylindrical platen 16 by well known means such as, for example, by cable and pulley with a reversible motor (not shown). A recording medium such as, for example, paper is mounted to platen 16. The platen has a diameter of between 10 and 20 cm and is constructed, for example, out of aluminum sleeve 17 with end caps 13 containing a shaft 13A therethrough which has a pulley 33 mounted on one end and driven via a stepper motor (not shown) by belt 32. The platen is rotatably mounted in frame sides 21 which also contain the ends of guide rails 22. The paper is held stationary by the platen while the carriage is moving in one direction. After completing each return transit, the paper is stepped by the platen in the direction of arrow 19 a distance equal to the height of the swath of data printed thereon by the printheads 14 during transversal in one direction across the paper. (In an alternative embodiment, as discussed further below with reference to Fig. 5, the stepping may be by half the height of the swath and occur between the forward and return transits.) The width of the sheet is the printing zone or region during the carriage transit and is indicated as distance A. To enable printing by all of the plurality of printheads and to accommodate printhead priming and maintenance stations (not shown), the overall travel distance B is larger than the printing region A. Thus, an encoder (not shown) must be used to monitor the position of the carriage 20 when the printheads are in the printing region. Droplets are ejected on demand from nozzles (not shown) located in the front faces (not shown) of the printheads along the trajectories 15 to the sheet. The front face of the printhead is spaced from the sheet a distance of between 0.01 and 0.1 inch (0.25 and 2.5 mm), with the preferred distance being about 0.02 inch (0.5 mm). The stepping tolerance of the platen drum 16, the sheet, and the linear deviation of the printheads are held within acceptable limits to permit contiguous swaths of information to be printed without gaps or overlaps.

Each cartridge 12 contains a different ink, typically one black and one or more cartridges of different selected colors. The combined cartridge and printhead is removed and discarded after the ink supply in the cartridge has been depleted. In this environment, some of the nozzles do not eject droplets during one complete carriage traversal and generally, none of the nozzles eject droplets as the printheads move beyond the edge of the platen. While at this end of the carriage transit, there is a small dwell time while the platen drum is being stepped one swath in height in the direction of arrow 19. A maintenance and priming station (not shown) is located on one side of the platen drum where the lesser used nozzles may fire nozzle-clearing droplets, and/or where the nozzles may be capped to prevent them from drying out during idle time when the printer is not being used.

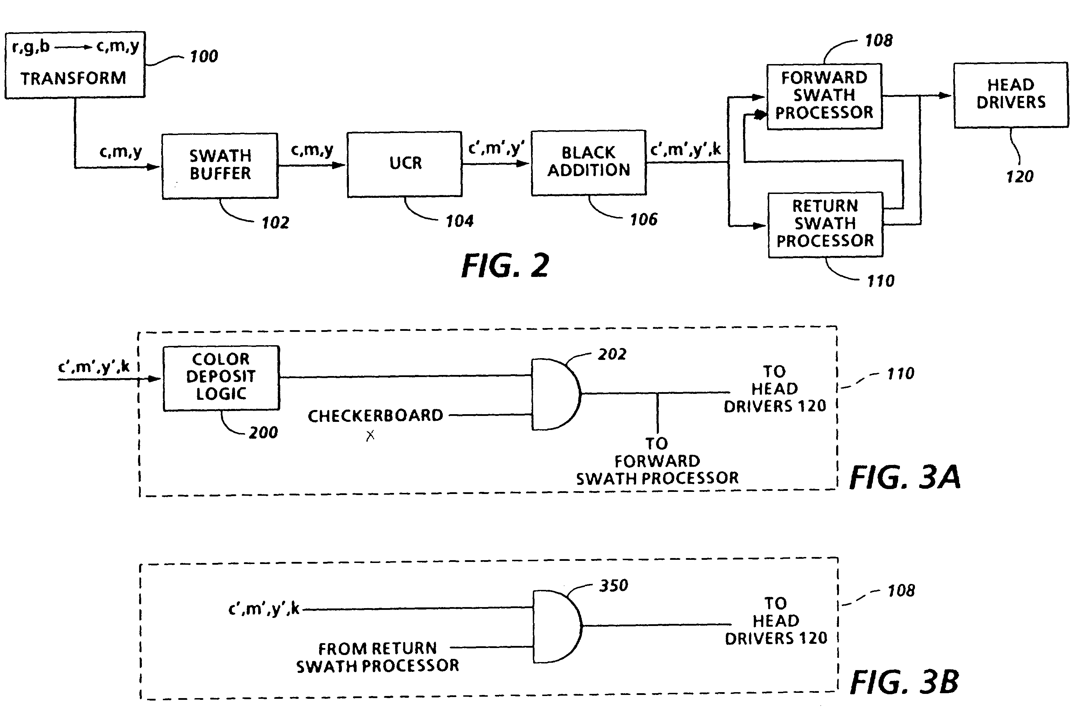

With reference now to Figure 2, a schematic system overview is presented. Typically, images to be printed are initially described in terms of device independent color coordinates r, g, b (colorimetric red, green and blue). Color descriptions expressed in terms of r, g, b color coordinates are converted to device dependent colorant descriptions at RGB-to-CMYK transform 100, to produce a set of colorant signals defined in terms of cyan, magenta, yellow and black colorants. A portion of the image may be conveniently stored at swath buffer 102, which may store a number of scan lines corresponding to a swath of the image to be printed in forward and return transits of the printhead past the sheet, as will be further described below. The conversion of signals from RGB to CMYK may include undercolor removal (UCR) and black addition. UCR operator 104 provides undercolor removal in the image, i.e. removing equivalent densities of colorants to the greatest extent possible (to produce modified color signals c', m', y'), so that any color is described for printing purposes by a maximum of two colorant signals. At black addition 106, black signal K is added to the colorant signals, in an amount related to the amount of undercolor removal. Now, any color in the image is formed by only one or two colorants.

As noted, the printhead reciprocates back and forth parallel to the sheet allowing printing of swaths on each transit of the sheet. There are two transits: a forward or first transit (commonly, although not necessarily, from right to left) and a return or second transit (commonly left to right). Accordingly, provided are forward swath processor 108 and return swath processor 110, each of which process the swath directed thereto, to produce image data for head drivers 120 to drive the printheads for printing during a corresponding transit. It will be noted that the output of return swath processor 110 is provided as an input to forward swath processor 108 as will be explained hereinafter.

With reference now to Figure 3A, return swath processor 110 includes color deposit logic 200 and AND gate 202. Color deposit logic 200 has as an input the four color signals c', m', y', k and determines which colors may be printed in the return transit irrespective of their order of deposit. The AND gate 202 logically ANDs the output of color deposit logic 202 with a signal X representing a checkerboard or chessboard pattern. As used herein, a checkerboard pattern refers to a head signature mitigation signal which represents a series of alternately ON and OFF pixels, where each line of the signal is offset by one signal place (pixel) from the previous line. The resultant signal, if it were printed, would look like a checkerboard. (Variations of the checkerboard pattern are possible, which tend to retain the relative relationship of ON signals to OFF signals, and which intermix the ON and OFF signals by position for head signature mitigation.) The checkerboard pattern is used, as described in US-A-4,999,646 to Trask, to reduce artifacts usually noted at swath boundaries.

The purpose of printing the second pass pixels in a checkerboard is to minimize head signature (the effect of each printhead having its own printing characteristic due to manufacturing variations). In order to maximize the effectiveness of printing with this pattern, it is desirable to print every (ON) pixel in the second-pass half of the checkerboard, as long as a color shift will not be produced as a result of laying down inks in a different order from the order in which they are printed in the first (forward) transit.

Suppose the order KCMY (K is the first deposited or lowest possible layer, and Y is the last deposited or highest possible layer, with respect to the sheet, on the forward transit) is used for right-to-left printing on the printer, and X is a bitmap checkerboard pattern signal, and C, M, Y and K denote separation bitmap signals representing the image. For the return or second pass,
**K**_{2LR} = **K** ∧ **X**
**C**_{2LR} = **C** ∧¬ (**M** ∨ **Y**) ∧ **X**
**M**_{2LR} = **M** ∧¬ **Y** ∧ **X**
**Y**_{2LR} = **Y** ∧ X

The subscript LR emphasizes that the direction of transit is left to right, and the symbols ∧ and ¬ represent logical AND and NOT operations, respectively, while the symbol ∨ represents a logical OR operation. It is desired that the inks to go down in the order of the forward transit. (Use of any other ordering of the inks can cause a change in the resulting color.) Thus one can only delay the printing of an ink until the return transit if it should lie on top of any other inks also deposited for that pixel. Since the deposit order of the layers is to be the forward printing order (Y above M above C), on the return pass, Y can always be safely printed during the return transit. The M ink can be printed provided there is no Y to be printed above it. Similarly, the C ink can be printed only if there is neither Y nor M to be printed above it in that pixel; and so on for all inks in the reverse order of printing. If any ink is guaranteed to never be overlaid with another ink (such as is usually the case for black ink) then it can be printed in the reverse transit irrespective of the other colors. The above example assumes that any pixel with all three separations C, M and Y set (HIGH) is replaced with one containing only K (black), as is believed done, e.g., in the Hewlett Packard HP500C, a process called binary undercolor removal. Otherwise, the expression for K becomes
**K**_{2LR} =**K** ∧¬ (**C** ∨ **M** ∨ **Y**) ∧ **X**.

With reference now to the forward swath, processor 108 (see Fig. 3B) has as an input the four color signals c', m', y', k and determines which colors may be printed in the forward transit based on the colors that will be printed on the return transit. In terms of printing colors in the right order, any pixels may be printed on the forward transit, so all pixels and separations that will not be printed on the return transit are printed on the forward transit. Generally, the logic arrangement has the function of an AND gate, with the signals from the return swath processor 110 inverted (by a logical inverter; not shown) to generate an AND NOT response. Once again, supposing order KCMY is used for right-to-left printing on the printer, and C, M, Y and K denote separation bitmaps representing the image
**K**_{1RL} = **K** ∧¬ **K**_{2LR}
**C**_{1RL} = **C** ∧¬ **C**_{2LR}
**M**_{1RL} = **M** ∧¬ **M**_{2LR}
**Y**_{1RL} = **Y** ∧¬ **Y**_{2LR}

These expressions can be expressed more directly as
**K**_{1RL} = **K** ∧¬ **X**
**C**_{1RL} = **C** ∧ (**M** ∨ **Y**) ∨¬ **X**
**M**_{1RL} = **M** ∧ (**Y** ∨¬ **X**)
**Y**_{1RL} = **Y** ∧¬ **X**

The subscript RL emphasizes that the direction of transit is right to left. This result suggests that during the forward transit, all colors and pixels that have not been designated from printing in the return transit, will be printed.

It will be understood that the forward and return transit deposit requirements are essentially reversible. It has been assumed in the above example that the forward transit deposit order is the fixed order that is to be obtained. It should be clear that the return transit deposit order could also provide the fixed order, instead. What is required for the invention is that, in one swath, only colorants that can be deposited without concern for order are deposited, while in the other swath, the remaining colorants are deposited in the fixed order.

Figure 4 illustrates the creation of the swath maps. The same example is assumed, with the forward transit printing in order KCMY. Accordingly, the return transit would print YMCK. The colors given in each box assume that the first letter represents a first layer (colorant) to be deposited. Beginning with an original (desired) swath map 300, it will be initially noted that due to undercolor removal, as far as colorants are concerned, there are no more than two colorants per pixel to be printed. Note that color is only deposited at a pixel location if order is irrelevant. Thus, since Y is the top or last layer printed, if the image has only yellow at a location, it is acceptable to print this layer in either transit, and therefore it can be printed in the return transit. With the same logic, the uppermost color in any two color combination can always be printed in the return transit, and accordingly the Y for YM or YC and the M for MC can be printed on the return transit. The remaining colors which are not suitably printed on the return transit are printed on the forward transit. The bitmap 302 representing the expressions **K**_{2LR}, **C**_{2LR}, **M**_{2LR}, **Y**_{2LR} illustrates the logical ANDing function of the signal X with the appropriate color signals that causes that color selected to be printed on the return transit to be printed in the checkerboard pattern. The bitmap 304, which consequently has to be printed on the forward transit, represents the abovementioned expressions **K**_{2RL}, **C**_{2RL}, **M**_{2RL}, **Y**_{2RL}.

With respect now to Figure 5, and as with normal unidirectional checkerboarding, half swath stepping down of the sheet can be used to improve the uniformity further. Half swath stepping requires that half of the scanlines in a swath are swept first right to left, while the other half are first swept left to right. A given swath (which might have either direction of travel) will contain half new scanlines (the bottom half) and half scanlines that have been printed on the previous pass (in the top half). For those scanlines swept left to right first, the above expressions hold. For the remaining scanlines, at most 100% ink can be printed in a given pixel on the first pass (so separations are printed in the right order), while any amount can be printed on the second pass. The second pass is derived from the first and the original image in the same way as the first was derived from the second above. The first pass uses:
k_{1Ir} = k ∧ x
c_{1Ir} = c ∧ x
m_{1Ir} = m ∧¬ c ∧ x
y_{1Ir} = y ∧¬ (m ∨ c) ∧ x;

Without undercolor removal this is:
k_{1Ir} = k ∧ x
c₁ₗᵣ = c ∧¬ k ∧ x
m_{1Ir} = m ∧¬ (k ∨ c) ∧ x
y_{1Ir} = y ∧¬ (k ∨ m ∨ c) ∧ x

(Alternatively one could use ¬ x).

For the second pass,
k₂ᵣₗ = k ∧¬ k₁ₗᵣ
c₂ᵣₗ = c ∧¬ c₁ₗᵣ
m₂ᵣₗ = m ∧¬ m₁ₗᵣ
y₂ᵣₗ = y ∧¬ y₁ₗᵣ

It will no doubt be appreciated that the invention can be accomplished with a hardware logic implementation thereof, or a software implementation on a programmable processing device, or a combination of hardware and software.

## Claims

1. A method of controlling an ink jet printer (10) having a reciprocable printhead for printing a swath of an image with a forward transit and a reverse transit across a sheet (24), the swath being formed of color pixels, each color pixel being printed with a set of colorants (A, B, C, D), the colorants (A, B, C, D) being deposited in a predetermined colorant deposit order, the method comprising the steps of:
a) receiving a set of colorant signals representing the color pixels;
b) from the received colorant signals, determining the colorants that may be deposited during the reverse transit while maintaining the predetermined colorant deposit order, and generating reverse-transit signals indicative thereof;
c) combining the reverse-transit signals with a predetermined compensation signal to produce compensated reverse-transit signals; and
d) determining from the received colorant signals and the compensated reverse-transit signals the colorants to be printed during the forward transit, and generating forward-transit signals indicative thereof.

2. The method as claimed in claim 1, further comprising the steps of:
e) controlling the printhead to print a partial forward-transit swath of the image with the forward-transit signals during the forward transit of the printhead across the sheet (24); and
f) controlling the printhead to print a complementary reverse-transit swath of the image with the compensated reverse-transit signals during the reverse transit of the printhead across the sheet (24).

3. The method as claimed in claim 1 or 2, wherein the predetermined colorant deposit order is defined by the forward transit.

4. The method as claimed in one of claims 1 to 3, wherein the predetermined compensation signal is a checkerboard pattern.

5. The method as claimed in one of claims 1 to 4, wherein the predetermined compensation signal is a head signature mitigation signal.

6. The method as claimed in one of claims 1 to 5, wherein the reverse-transit signals and the predetermined compensation signal are logically ANDed.

7. The method as claimed in one of claims 1 to 6, further comprising, prior to step (b), the step of:
processing the received colorant signals for undercolor removal (UCR) and black addition, so that any color pixel is printed with at most two colorants, or black.

8. The method as claimed in one of claims 2 to 7, further comprising the step of:
providing relative movement between the sheet (24) and the reciprocable printhead, to advance printing by an amount corresponding to about half a swath for each successive transit, whereby about half of the forward-transit swath overlaps about half of the reverse-transit swath.

9. The method as claimed in one of claims 1 to 8, wherein:
colorant A is never printed in combination with any other colorant (B, C, D);
colorant A is printed in any arbitrary position in the predetermined colorant deposit order;
the other colorants (B, C, D) are printable in a fixed predetermined order (B-C-D) during the forward transit; and
the reverse-transit signals are determined by:
**B**_{2LR} = **B** ∧¬ (**C** ∨ **D**)
**C**_{2LR} = **C** ∧¬ **D**
**D**_{2LR} = **D**
wherein:
2LR refers to the reverse-transit swath;
¬ refers to the logical operand NOT;
∧ refers to the logical operand AND; and
∨ refers to the logical operand OR.

10. The method as claimed in claim 9, wherein the reverse-transit signals are further determined by:
**A**_{2LR} = **A**

11. The method as claimed in one of claims 1 to 8, wherein:
colorant A is never printed in combination with any other colorant (B, C, D);
colorant A is printed in any arbitrary position in the predetermined colorant deposit order;
the other colorants (B, C, D) are printable in a fixed predetermined order (B-C-D) during the forward transit; and
the compensated reverse-transit signals are determined by:
**A**_{2LR} = **A** ∧ **X**
**B**_{2LR} = **B** ∧¬ (**C** ∨ D) ∧ **X**
**C**_{2LR} = **C** ∧¬ **D** ∧ **X**
**D**_{2LR} = **D** ∧ **X**
wherein:
2LR refers to the reverse-transit swath;
¬ refers to the logical operand NOT;
∧ refers to the logical operand AND;
∨ refers to the logical operand OR; and
X refers to the predetermined compensation signal.

12. The method as claimed in one of claims 1 to 8, wherein:
any colorant (A, B, C, D) may be printed in combination with any other colorants (A, B, C, D);
the colorants (A, B, C, D) are printable in a fixed predetermined order (A-B-C-D) during the forward transit; and
the compensated reverse-transit signals are determined by:
**A**_{2LR} = **A** ∧¬ (**B** ∨ **C** ∨ **D**) ∧ **X**
**B**_{2LR} = **B** ∧¬ (**C** ∨ **D**) ∧ **X**
**C**_{2LR} = **C** ∧¬ **D** ∧ **X**
**D**_{2LR} = **D** ∧ **X**
wherein
2LR refers to the reverse-transit swath;
¬ refers to the logical operand NOT;
∧ refers to the logical operand AND;
∨ refers to the logical operand OR; and
X refers to the predetermined compensation signal.

13. The method as claimed in one of claims 10 to 12, wherein the forward-transit signals are determined by:
**A**_{1RL} = **A** ∧¬ **A**_{2LR}
**B**_{1RL} = **B** ∧¬ **B**_{2LR}
**C**_{1RL} = **C** ∧¬ **C**_{2LR}
**D**_{1RL} = **D** ∧¬ **D**_{2LR}
wherein:
1RL refers to the forward-transit swath.

14. A color ink jet printer having a reciprocable printhead for printing a swath of an image with a forward transit and a reverse transit across a sheet (24), the swath being formed of color pixels, each color pixel being printed with a set of colorants (A, B, C, D), the colorants (A, B, C, D) being deposited in a predetermined colorant deposit order, the color ink jet printer comprising:
a) a colorant signal input operatively connected to a source of colorant signals representing color pixels;
b) reverse-swath processing means (110) responsive to the received colorant signals for determining the colorants that may be deposited during the reverse transit while maintaining the predetermined colorant deposit order, and generating reverse-transit signals indicative thereof;
c) logic means (202) for logically ANDing the reverse-transit signals with a predetermined compensation signal to produce compensated reverse-transit signals;
d) forward-swath processing means (108) responsive to the received colorant signals and the compensated reverse-transit signals for determining the colorants to be printed during the forward transits, and generating forward-transit signals indicative thereof; and
e) printer control means (120) for controlling the printhead to print a partial forward-transit swath of the image with the forward-transit signals during the forward transit of the printhead across the sheet (24), and controlling the printhead to print a complementary reverse-transit swath of the image with the compensated reverse-transit signals during the reverse transit of the printhead across the sheet (24).

## Patentansprüche

1. Verfahren zum Steuern eines Tintenstrahldruckers (10) mit einem vorwärts und rückwärts beweglichen Druckkopf zum Drucken einer Bahn eines Bildes während einer Vorwärtsbewegung und einer Rückwärtsbewegung über ein Blatt (24), wobei die Bahn aus Farbpixeln gebildet wird, welche jeweils durch einen Satz aus Farbtinten (A, B, C, D) gedruckt werden, wobei die Farbtinten (A, B, C, D) in einer vorbestimmten Reihenfolge für das Auftragen von Farbtinten aufgetragen werden, wobei das Verfahren folgende Schritte umfaßt:
a) Empfangen eines Satzes von Farbtintensignalen, welche die Farbpixel wiedergeben,
b) Bestimmen der Farbtinten, die während der Rückwärtsbewegung unter Einhaltung der vorbestimmten Reihenfolge für das Auftragen von Farbtinten aufgetragen werden können, aus den empfangenen Farbtintensignalen und Erzeugen von entsprechenden Rückwärtsbewegungssignalen,
c) Kombinieren der Rückwärtsbewegungssginale mit einem vorbestimmten Kompensationssignal, um kompensierte Rückwärtsbewegungssignale zu erzeugen, und
d) Bestimmen der während der Vorwärtsbewegung zu druckenden Farbtinten aus den empfangenen Farbtintensignalen und den kompensierten Rückwärtsbewegungssignalen und Erzeugen von entsprechenden Vorwärtsbewegungssignalen.

2. Verfahren nach Anspruch 1, welches weiterhin folgende Schritte umfaßt:
e) Steuern des Druckkopfs, um eine Vorwärtsbewegung-Teilbahn des Bildes mit den Vorwärtsbewegungssignalen während der Vorwärtsbewegung des Druckkopfs über das Blatt (24) zu drucken, und
f) Steuern des Druckkopfs, um eine komplementäre Rückwärtsbewegungsbahn des Bildes mit den kompensierten Rückwärtsbewegungssignalen während der Rückwärtsbewegung des Druckkopfs über das Blatt (24) zu drucken.

3. Verfahren nach Anspruch 1 oder 2, wobei die vorbestimmte Reihenfolge für das Auftragen von Farbtinten durch die Vorwärtsbewegung definiert wird.

4. Verfahren nach wenigstens einem der Ansprüche 1 bis 3, wobei das vorbestimmte Kompensationssignal ein Schachbrettmuster ist.

5. Verfahren nach wenigstens einem der Ansprüche 1 bis 4, wobei das vorbestimmte Kompensationssignal ein Kopfsignatur-Korrektursignal ist.

6. Verfahren nach wenigstens einem der Ansprüche 1 bis 5, wobei die Rückwärtsbewegungssignale und das vorbestimmte Kompensationssignal logisch UND-verknüpft werden.

7. Verfahren nach wenigstens einem der Ansprüche 1 bis 6, welches weiterhin vor Schritt (b) folgenden Schritt umfaßt:
Verarbeiten der empfangenen Farbtintensignale für die Unterfarbenentfernung (UCR) und das Hinzufügen von Schwarz, so daß jedes Farbpixel mit höchstens zwei Farbtinten oder mit Schwarz gedruckt wird.

8. Verfahren nach wenigstens einem der Ansprüche 2 bis 7, welches weiterhin folgenden Schritt umfaßt:
Vorsehen einer relativen Bewegung zwischen dem Blatt (24) und dem vorwärts und rückwärts beweglichen Druckkopf, um das Drucken für jede folgende Bewegung um eine halbe Bahn weiterzurücken, wobei eine Hälfte der Vorwärtsbewegungsbahn ungefähr eine Hälfte der Rückwärtsbewegungsbahn überlappt.

9. Verfahren nach wenigstens einem der Ansprüche 1 bis 8, wobei:
die Farbtinte A niemals in Kombination mit einer der anderen Farbtinten (B, C, D) gedruckt wird,
die Farbtinte A an einer beliebigen Position in der vorbestimmten Reihenfolge für das Auftragen von Farbtinten gedruckt wird,
die anderen Farbtinten (B, C, D) in einer fixen vorbestimmten Reihenfolge (B-C-D) während der Vorwärtsbewegung gedruckt werden können, und
die Rückwärtsbewegungssignale bestimmt werden durch:
B_{2LR} = B ∧¬ (C ∨ D)
C_{2LR} = C ∧¬ D
D_{2LR} = D
wobei
2LR die Rückwärtsbewegungsbahn bezeichnet,
¬ den logischen Operanden NICHT bezeichnet,
∧ den logischen Operanden UND bezeichnet, und
∨ den logischen Operanden ODER bezeichnet.

10. Verfahren nach Anspruch 9, wobei die Rückwärtsbewegungssignale weiterhin bestimmt werden durch:
A_{2LR} = A

11. Verfahren nach wenigstens einem der Ansprüche 1 bis 8, wobei:
die Farbtinte A niemals in Kombination mit einer der anderen Farbtinten (B, C, D) gedruckt wird,
die Farbtinte A an einer beliebigen Position in der vorbestimmten Reihenfolge für das Auftragen von Farbtinten gedruckt wird,
die anderen Farbtinten (B, C, D) in einer fixen vorbestimmten Reihenfolge (B-C-D) während der Vorwärtsbewegung gedruckt werden können, und
die kompensierten Rückwärtsbewegungssignale bestimmt werden durch:
A_{2LR} = A ∧ X
B_{2LR} = B ∧¬ (C ∨ D) ∧ X
C_{2LR} = C ∧¬ D ∧ X
D_{2LR} = D ∧ X
wobei:
2LR die Rückwärtsbewegungsbahn bezeichnet,
¬ den logischen Operanden NICHT bezeichnet,
∧ den logischen Operanden UND bezeichnet
∨ den logischen Operanden ODER bezeichnet, und
X das vorbestimmte Kompensationssignal bezeichnet.

12. Verfahren nach wenigstens einem der Ansprüche 1 bis 8, wobei:
jede Farbtinte (A, B, C, D) in Kombination mit einer beliebigen anderen Farbtinte (A, B, C, D) gedruckt werden kann,
die Farbtinten (A, B, C, D) in einer fixen vorbestimmten Reihenfolge (A-B-C-D) während der Vorwärtsbewegung gedruckt werden können, und
die kompensierten Rückwärtsbewegungssignale bestimmt werden durch:
A_{2LR} = A ∧¬ (B ∨ C ∨ D) ∧ X
A_{2LR} = B ∧¬ (C ∨ D) ∧ X
C_{2LR} = C ∧¬ D ∧ X
D_{2LR} = D ∧ X
wobei
2LR die Rückwärtsbewegungsbahn bezeichnet,
¬ den logischen Operanden NICHT bezeichnet,
∧ den logischen Operanden UND bezeichnet
∨ den logischen Operanden ODER bezeichnet, und
X das vorbestimmte Kompensationssignal bezeichnet.

13. Verfahren nach wenigstens einem der Ansprüche 10 bis 12, wobei die Vorwärtsbewegungssignale bestimmt werden durch:
A_{1RL} = ∧¬ A_{2LR}
B_{1RL} = B ∧¬ B_{2LR}
C_{1RL} = C ∧¬ C_{2LR}
D_{1RL} = D ∧¬ D_{2LR}
wobei
1RL die Vorwärtsbewegungsbahn bezeichnet.

14. Farbtintenstrahldrucker mit einem vorwärts und rückwärts beweglichen Druckkopf zum Drucken einer Bahn eines Bildes während einer Vorwärtsbewegung und einer Rückwärtsbewegung über ein Blatt (24), wobei die Bahn aus Farbpixeln gebildet wird, welche jeweils durch einen Satz aus Farbtinten (A, B, C, D) gedruckt werden, wobei die Farbtinten (A, B, C, D) in einer vorbestimmten Reihenfolge für das Auftragen von Farbtinten aufgetragen werden, wobei der Farbtintenstrahldrucker umfaßt:
a) eine Farbtintensignaleingabe, die operativ mit einer Quelle von Farbpixel wiedergebenden Farbtintensignalen verbunden ist,
b) eine Rückwärtsbahn-Verarbeitungseinrichtung (110), die auf die empfangenen Farbtintensignale reagiert, um die Farbtinten zu bestimmen, die während der Rückwärtsbewegung unter Einhaltung der vorbestimmten Reihenfolge für das Auftragen von Farbtinten aufgetragen werden können, und um entsprechende Rückwärtsbewegungssignale zu erzeugen,
c) eine Logikeinrichtung (202) zum logischen UND-Verknüpfen der Rückwärtsbewegungssignale mit einem vorbestimmten Kompensationssignal, um kompensierte Rückwärtsbewegungssignale zu erzeugen,
d) eine Vorwärtsbahn-Verarbeitungseinrichtung (108), die auf die empfangenen Farbtintensignale und die kompensierten Rückwärtsbewegungssignale reagiert, um die während der Vorwärtsbewegung zu druckenden Farbtinten zu bestimmen und um entsprechende Vorwärtsbewegungssignale zu erzeugen, und
e) eine Druckersteuereinrichtung (120) zum Steuern des Druckkopfs, um eine Vorwärtsbewegungsteilbahn des Bildes mit den Vorwärtsbewegungssignalen während der Vorwärtsbewegung des Druckkopfs über das Blatt (24) zu drucken, und zum Steuern des Druckkopfs, um eine komplementäre Rückwärtsbewegungsbahn des Bildes mit den kompensierten Rückwärtsbewegungssignalen während der Rückwärtsbewegung des Druckkopfs über das Blatt (24) zu drucken.

## Revendications

1. Procédé de commande d'une imprimante à jet d'encre (10) ayant une tête d'impression pouvant être animée d'un mouvement de va-et-vient pour imprimer une bande d'une image lors d'un transit en sens avant et d'un transit en sens arrière au-dessus d'une feuille (24), la bande étant formée de pixels colorés, chaque pixel coloré étant imprimé avec un ensemble de colorants (A, B, C, D), les colorants (A, B, C, D) étant déposés dans un ordre de dépôt de colorant prédéterminé, le procédé comprenant les étapes de :
a) réception d'un ensemble de signaux de colorant représentant les pixels colorés ;
b) à partir des signaux de colorant reçus, détermination des colorants qui peuvent être déposés pendant le transit en sens arrière tout en maintenant l'ordre de dépôt de colorant prédéterminé, et génération de signaux de transit en sens arrière représentatifs de ceux-ci ;
c) combinaison des signaux de transit en sens arrière avec un signal de compensation afin de produire des signaux de transit en sens arrière compensés ; et
d) détermination, à partir des signaux de colorant reçus et des signaux de transit en sens arrière compensés, des colorants devant être imprimés pendant le transit en sens avant, et génération de signaux de transit en sens avant représentatifs de ceux-ci.

2. Procédé selon la revendication 1, comprenant en outre les étapes de :
e) commande de la tête d'impression afin d'imprimer une bande partielle de transit en sens avant de l'image à partir des signaux de transit en sens avant pendant le transit en sens avant de la tête d'impression au-dessus de la feuille (24) ; et
f) commande de la tête d'impression afin d'imprimer une bande de transit en sens arrière complémentaire de l'image avec les signaux de transit en sens arrière compensés pendant le transit en sens arrière de la tête d'impression au-dessus de la feuille (24).

3. Procédé selon la revendication 1 ou 2, dans lequel l'ordre de dépôt de colorant prédéterminé est défini par le transit en sens avant.

4. Procédé selon l'une des revendications 1 à 3, dans lequel le signal de compensation prédéterminé est un motif en échiquier.

5. Procédé selon l'une des revendications 1 à 4, dans lequel le signal de compensation prédéterminé est un signal d'atténuation de la signature de la tête.

6. Procédé selon l'une quelconque des revendications 1 à 5, dans lequel les signaux de transit en sens arrière et le signal de compensation prédéterminé sont combinés par un ET logique.

7. Procédé selon l'une des revendications 1 à 6, comprenant en outre, avant l'étape (b), l'étape :
de traitement des signaux de colorant reçus pour l'élimination des sous-couches (UCR) et l'addition de noir, afin qu'un pixel coloré quelconque soit imprimé avec au plus deux colorants, ou du noir.

8. Procédé selon l'une des revendications 2 à 7, comprenant en outre l'étape :
d'application d'un mouvement relatif entre la feuille (24) et la tête d'impression pouvant être animée d'un mouvement de va-et-vient, pour faire avancer l'impression d'une distance correspondant à environ la moitié d'une bande pour chaque transit successif, d'où il résulte qu'environ la moitié de la bande de transit en sens avant chevauche environ la moitié de la bande de transit en sens arrière.

9. Procédé selon l'une des revendications 1 à 3, dans lequel :
le colorant A n'est jamais imprimé en association avec un autre colorant quelconque (B, C, D) ;
le colorant A est imprimé à une position quelconque dans l'ordre de dépôt de colorant prédéterminé ;
les autres colorants (3, C, D) peuvent être imprimés dans un ordre prédéterminé fixe (B-C-D) pendant le transit en sens avant ; et
les signaux de transit en sens arrière sont déterminés par :
**B**_{2LR} = **B** ∧ ¬ (**C** ∨ **D**)
**C**_{2LR} = **C** ∧ ¬ **D**
**D**_{2LR} = **D**
où
2LR représente la bande de transit en sens arrière ;
¬ représente l'opérande logique NON ;
∧ représente l'opérande logique ET ; et
∨ représente l'opérande logique OU.

10. Procédé selon la revendication 9, dans lequel les signaux de transit en sens arrière sont en outre déterminés par :
**A**_{2LR} = **A**

11. Procédé selon l'une des revendications 1 à 8, dans lequel :
le colorant A n'est jamais imprimé en association avec un autre colorant quelconque (B, C, D) ;
le colorant B est imprimé à une position arbitraire quelconque dans l'ordre de dépôt du colorant prédéterminé ;
les autres colorants (B, C, D) peuvent être imprimés dans un ordre prédéterminé fixe (B-C-D) pendant le transit en sens avant ; et
les signaux de transit en sens arrière compensés sont déterminés par :
**A**_{2LR} = **A** ∧ **X**
**B**_{LR} = **B** ∧ ¬ (**C** ∨ **D**) ∧ X
**C**_{2LR} = **C** ∧ ¬ **D** ∧ **X**
**D**_{2LR} = **D** ∧ X
où
2LR représente la bande de transit en sens arrière ;
¬ représente l'opérande logique NON ;
∧ représente l'opérande logique ET ;
∨ représente l'opérande logique OU ; et
X représente le signal de compensation prédéterminé.

12. Procédé selon l'une des revendications 1 à 8, dans lequel :
un colorant quelconque (A, B, C, D) peut être imprimé en association avec d'autres colorants quelconques (A, B, C, D) ;
les colorants (A, B, C, D) peuvent être imprimés dans un ordre prédéterminé fixe (A-B-C-D) pendant le transit en sens avant ; et
les signaux de transit en sens arrière compensés sont déterminés par :
**A**_{2LR} = **A** ∧ ¬ (**B** ∨ **C** ∨ **D**) ∧ **X**
**B**_{2LR} = **B** ∧ ¬ (**C** ∨ **D**) ∧ **X**
**C**_{2LR} = **C** ∧ ¬ **D** ∧ **X**
**D**_{2LR} = **D** ∧ **X**
où
2LR représente la bande de transit en sens arrière ;
¬ représente l'opérande logique NON ;
∧ représente l'opérande logique ET ;
∨ représente l'opérande logique OU ; et
X représente le signal de compensation prédéterminé.

13. Procédé selon l'une des revendications 10 12, dans lequel les signaux de transit en sens avant sont déterminés par :
**A**_{1RL} = **A** ∧ ¬ **A**_{2LR}
**B**_{1RL} = **B** ∧ ¬ **B**_{2LR}
**C**_{1RL} = **C** ∧ ¬ **C**_{2LR}
**D**_{1RL} = **D** ∧ ¬ **D**_{2LR}
où
1RL représente la bande de transit en sens avant.

14. Imprimante à jet d'encre couleur ayant une tête d'impression pouvant être animée d'un mouvement de va-et-vient pour imprimer une bande d'une image par un transit en sens avant et un transit en sens arrière au-dessus d'une feuille (24), la bande étant formée de pixels colorés, chaque pixel étant imprimé avec un ensemble de colorants (A, B, C, D), les colorants (A, B, C, D) étant déposés dans un ordre de dépôt de colorant prédéterminé, l'imprimante à jet d'encre couleur comprenant :
a) un signal de colorant fourni en entrée, fonctionnellement connecté à une source de signaux de colorant représentant des pixels colorés ;
b) des moyens de traitement de bande en sens arrière (110) sensibles aux signaux de colorant reçus pour déterminer les colorants qui peuvent être déposés pendant le transit en sens arrière tout en conservant l'ordre de dépôt de colorant prédéterminé, et pour générer des signaux de
transit en sens arrière représentatifs de ceux-ci ; c) des moyens logiques (202) pour combiner par un ET logique les signaux de transit en sens arrière avec un signal de compensation prédéterminé afin de produire des signaux de transit en sens arrière compensés ;
d) des moyens de traitement de bande en sens avant (108) sensibles aux signaux de colorant reçus et aux signaux de transit en sens arrière compensés pour déterminer les colorants devant être imprimés pendant les transits en sens avant, et générer des signaux de transit en sens avant représentatifs de ceux-ci ; et
e) des moyens de commande d'imprimante (120) pour commander la tête d'impression afin d'imprimer une bande de transit en sens avant partielle de l'image avec les signaux de transit en sens avant pendant le transit en sens avant de la tête d'impression au-dessus de la feuille (24), et commander la tête d'impression pour imprimer une bande de transit en sens arrière complémentaire de l'image avec les signaux de transit en sens arrière compensés pendant le transit en sens arrière de la tête d'impression au-dessus de la feuille (24).
